# FASCICULE DE BREVET EUROPEEN

(11) **EP 2 495 115 B1**
(45) Date de publication et mention de la délivrance du brevet: **18.02.2015**
(21) Numéro de dépôt: 12157977.5
(22) Date de dépôt: 02.03.2012
(51) Int. Cl.: B60D 1/06, B60D 1/24, B60D 1/28, B60D 1/58, B60D 1/48, B62D 21/02, B60R 19/56

(54) **Agencement de traverse et équerre pour un tel agencement**
Queranordnung und Winkel für eine solche Anordnung
Cross-piece arrangement and bracket for such an arrangement

(30) Priorité: 04.03.2011 FR 1151762
(43) Date de publication de la demande: 05.09.2012
(73) Titulaire: Pommier, 95310 Saint Ouen l'Aumone (FR)
(72) Inventeur: Preud'Homme, Thierry, 95450 Commeny (FR)
(74) Mandataire: Berger, Helmut

(56) Documents cités:
- EP-A1- 2 316 670
- EP-A2- 0 501 150
- WO-A1-2006/005101
- DE-U1- 8 801 489
- DE-U1-202010 008 777
- NL-C1- 1 029 987

## Description

L'invention concerne un agencement de traverse pour l'accouplement d'une remorque à un véhicule tracteur, la traverse étant montée sur le châssis du véhicule, ainsi qu'une équerre pour un tel agencement.

Les traverses d'attelage, c'est-à-dire les traverses conformées pour recevoir un crochet d'attelage, lorsqu'elles ne sont pas montées directement aux longerons du châssis d'un véhicule puisqu'elles doivent être disposées à un niveau différent de celui des longerons, sont généralement montées entre deux joues qui, elles, sont fixées aux longerons.

Un tel agencement présente l'inconvénient majeur d'avoir une structure complexe puisque les extrémités de la traverse doivent être pourvues de flasques, ayant généralement la forme d'un U, pour pouvoir être fixées sur lesdites joues. De plus, la longueur de la traverse doit être déterminée précisément selon la distance entre les longerons du châssis sur lequel doit être fixée la traverse et selon les épaisseurs des joues et flasques nécessaires au montage. Ce type d'agencement implique donc un grand nombre de pièces variées à tenir à disposition pour pouvoir répondre à la grande variété de conceptions de véhicules.

Le document WO-A-2006/005101 propose une solution pour fixer une traverse à un niveau inférieur moyennant un minimum de pièces, à savoir par deux plaques identiques. Ces deux plaques comportent une première zone avec des trous pour la fixation des plaques sur les longerons et une seconde zone avec deux passages par lesquelles passent respectivement la traverse et la barre anti-encastrement. Le désavantage de cette solution est que les passages doivent être formés précisément selon la forme et les dimensions de la section transversale de chacune de ces deux barres. Bien que cette solution permette de réduire le nombre de pièces de montage par rapport aux solutions antérieures, il n'en reste pas moins qu'il faut néanmoins prévoir une grande variété de plaques pour pouvoir répondre aux différentes exigences relatives aux sections transversales des traverses et des barres anti-encastrement et leur différentes combinaisons.

L'invention a pour but de pallier cet inconvénient.

Pour atteindre ce but, l'agencement selon l'invention comprend deux équerres identiques par lesquelles la traverse est montée sur le châssis. Les deux équerres, qui servent en même temps au montage d'une barre anti-encastrement transversale sur le châssis du véhicule, sont des éléments monolithiques obtenus par découpe dans une tôle et présentant une partie principale plane comportant deux zones, à savoir une zone de fixation de l'équerre sur le châssis du véhicule et une zone de fixation de la traverse sur l'équerre.

Selon l'invention, cette seconde zone comporte deux ailes pour la fixation de la traverse et de la barre anti-encastrement sur l'équerre, les ailes étant espacées l'une de l'autre et s'étendant transversalement par rapport à la partie principale, les deux ailes de chacune des équerres étant pliées dans des sens opposés.

En ce qui concerne la réalisation des différents éléments de l'agencement de l'invention, il y a les possibilités suivantes :
- la traverse et la barre anti-encastrement sont fixées sur les équerres à l'aide de boulons ;
- les équerres sont adaptées pour être fixées sur le châssis du véhicule à l'aide de boulons ;
- la traverse et la barre anti-encastrement présentent chacune un profil en U dont la base comporte une zone de fixation d'un crochet d'attelage et dont les deux branches sont adaptées pour la fixation respectivement de la traverse et de la barre anti-encastrement sur les équerres ;
- la largeur de la base de la traverse et la largeur de la base de la barre anti-encastrement sont déterminées de façon que la traverse puisse être montée directement sur les équerres et que la barre anti-encastrement puisse au moins partiellement coiffer la traverse de façon à être montée sur les équerres à travers les branches de la traverse ;
- la barre anti-encastrement présente une longueur supérieure à la longueur de la traverse ;
- la traverse et la barre anti-encastrement présentent la même longueur.

L'invention concerne également une équerre pour le montage d'une traverse sur le châssis d'un véhicule par l'intermédiaire de deux équerres identiques servant en même temps au montage d'une barre anti-encastrement transversale sur le châssis du véhicule, chacune des deux équerres étant un élément monolithique obtenu par découpe dans une tôle et présentant une partie principale plane comportant deux zones, à savoir une zone de fixation de l'équerre sur le châssis du véhicule et une zone de fixation de la traverse sur l'équerre.

Selon l'invention, cette seconde zone comporte deux ailes pour la fixation de la traverse et de la barre anti-encastrement sur l'équerre, les ailes étant espacées l'une de l'autre et s'étendant transversalement par rapport à la partie principale, les deux ailes étant pliées dans des sens opposés.

D'autres caractéristiques et avantages de la présente invention ressortiront de la description ci-après d'un mode de réalisation de l'invention. La description est faite en référence aux dessins dont
la figure 1 représente un agencement selon l'invention en une vue éclatée ;
la figure 2 représente une variante de l'agencement de la figure 1, également en une vue éclatée ;
la figure 3 représente l'agencement de la figure 2 en état assemblé et avec un crochet d'attelage; et
la figure 4 représente l'agencement de la figure 3 en une vue latérale.

Le mode de réalisation de l'agencement selon l'invention représenté sur les dessins s'applique par exemple à des camions bennes ayant un poids autorisé (PTAC) de 2.000 à 7.500 kg. De tels véhicules ont un châssis situé plus haut par rapport à la route que celui des fourgons de cette même gamme de poids autorisés et sont susceptibles de tracter des petites remorques telles des générateurs ou compresseurs, c'est-à-dire des remorques à timon bas.

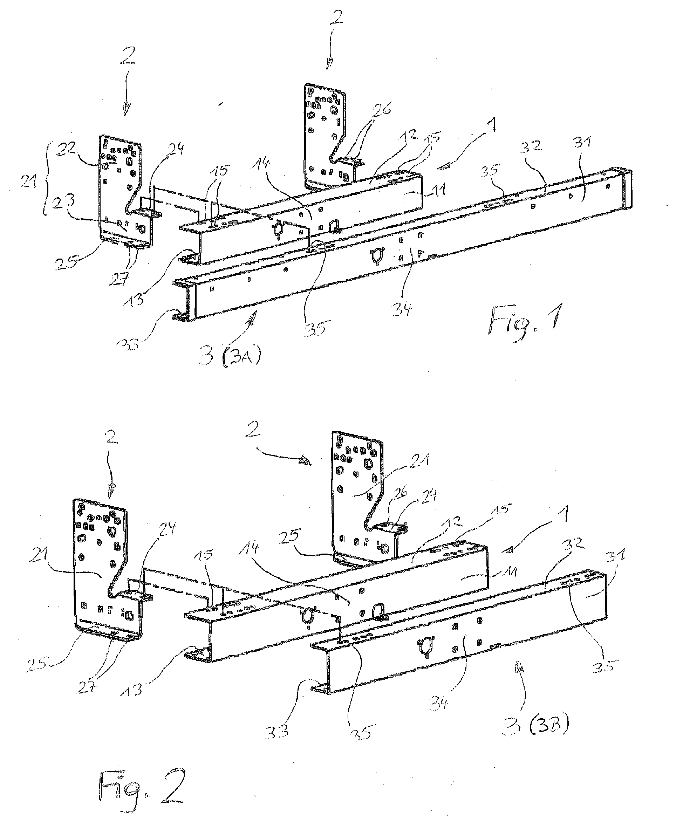

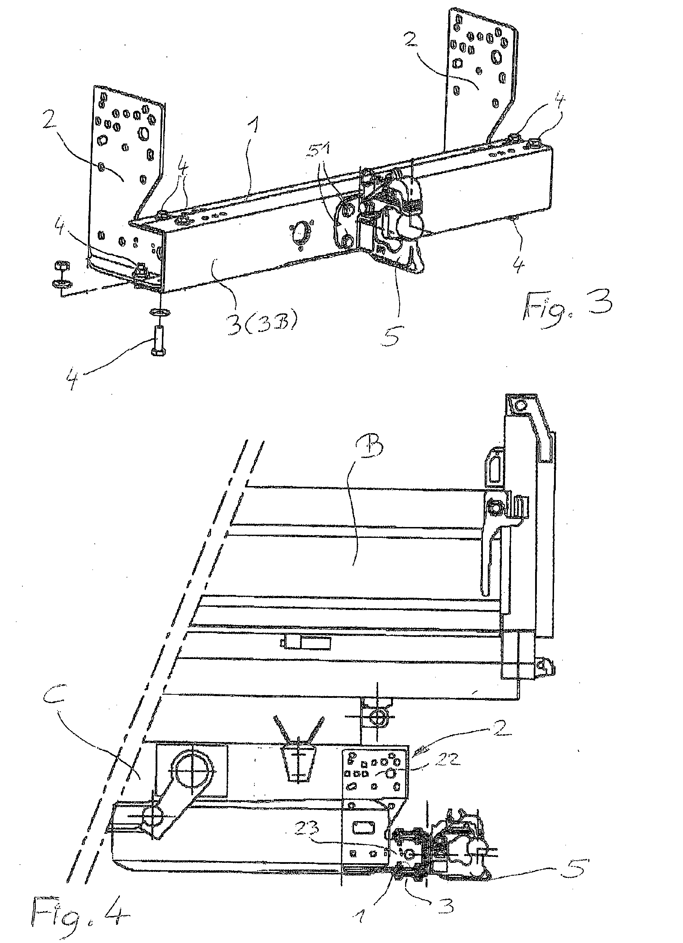

La figure 1 représente un agencement selon l'invention comprenant une traverse 1, deux équerres identiques 2 et une barre anti-encastrement 3. La barre 3 est référencée sur cette figure en 3A pour la distinguer d'une variante 3B visible sur les figures 2 et 3. La barre 3A est plus longue que la traverse 1 car elle est sensée s'étendre sur approximativement la largeur entière du véhicule.

La traverse 1 est formée par un profilé en U comprenant une base 11 et deux branches 12, 13 parallèles entre elles et perpendiculaires à la base 11. La base 11 comporte une zone centrale 14 adaptée pour la fixation d'un crochet d'attelage (visible sur les figures 3 et 4).

La barre anti-encastrement 3A est formée par un profilé en U et comprend une base 31 et deux branches 32, 33 parallèles entre elles et perpendiculaires à la base 31. La base 31 comporte une zone centrale 34 adaptée pour la fixation dudit crochet d'attelage.

Les deux équerres 2 sont des éléments monolithiques identiques, c'est-à-dire des éléments obtenus par découpe dans une tôle et par pliage. Chacune des équerres 2 comprend une partie principale plane 21 comportant une zone 22 de fixation de l'équerre sur le châssis du véhicule et une zone 23 de fixation de la traverse 1 sur l'équerre. La zone 23 comporte deux ailes 24, 25 espacées l'une de l'autre et s'étendant transversalement par rapport à la partie principale 21 mais dans des sens opposés, pour la fixation de la traverse et de la barre anti-encastrement.

Les deux ailes 24, 25 de chaque équerre 2 comportent des perforations 26, 27 pour une fixation de la traverse 1 et de la barre anti-encastrement 3A moyennant des boulons. Des perforations correspondantes 15 et 35 sont formées sur les branches 12, 13 et 32, 33 respectivement de la traverse 1 et de la barre 3A.

La figure 2 représente une variante du mode de réalisation de la figure 1 dans le sens que la barre anti-encastrement, référencée ici en 3B, présente la même longueur que la traverse 1. Dans cette configuration, la barre anti-encastrement devient une seconde traverse d'attelage.

La figure 3 représente l'agencement selon l'invention en état assemblé. On voit sur cette figure que la traverse 1 est fixée directement sur les ailes 24, 25 de chacune des équerres 2 au moyen de quatre boulons 4 (le quatrième boulon n'étant pas visible en raison de la perspective). On y voit également que la barre anti-encastrement 3B est posée sur la traverse 1 de façon à la coiffer. En raison de la largeur moindre des branches 32, 33 de la barre 3B par rapport à la largeur des branches 12, 13 de la traverse 1, la barre 3B ne coiffe la traverse 1 que partiellement. De ce fait, la barre 3B est fixée sur les ailes 24, 25 des équerres 2 moyennant quatre boulons 4 qui traversent, et fixent ainsi, en même temps les branches 12, 13 de la traverse 1.

Il est évident que ce mode d'assemblage s'applique de manière identique à la configuration représentée sur

la figure 1, c'est-à-dire lorsque la barre anti-encastrement est plus longue que la traverse.

La figure 3 représente par ailleurs le positionnement du crochet d'attelage 5 et sa fixation sur la traverse 1 et la barre anti-encastrement 3B au moyen de boulons 51.

La figure 4 représente l'agencement de la figure 3 en une vue latérale. On y voit la partie arrière d'une benne B sur les longerons d'un châssis C. Les équerres 2 de l'agencement selon l'invention sont montées avec leurs parties supérieures 22 sur les extrémités arrière des longerons. Sur leurs parties inférieures 23 sont montées la traverse 1 et la barre anti-encastrement 3. Et le crochet d'attelage 5 est monté à la fois sur la traverse 1 et la barre anti-encastrement 3.

Avec l'agencement de l'invention, les fonctions « attelage » et « anti-encastrement » peuvent être réalisées avec seulement trois éléments, à savoir une traverse d'attelage, une barre anti-encastrement et une équerre en deux exemplaires identiques. Ceci représente un avantage pour le montage de la traverse et encore plus un avantage particulier logistique.

De plus, aussi bien la traverse que la barre anti-encastrement peuvent être coupées à toute longueur souhaitée et avec une plus grande tolérance de découpe que cela ne serait possible dans un montage décrit en entrée de la présente description. Il en résulte un avantage pour le coût de fabrication des traverses et des barres anti-encastrement et, dans l'ensemble, un avantage de plus grande versatilité des équerres.

Deux autres avantages sont obtenus par le pliage des ailes des équerres dans deux sens opposées : d'une part, ce type de pliage permet d'utiliser les équerres indifféremment à droite et à gauche de la traverse et, d'autre part, les efforts exercés par la traverse, et aussi ceux exercés le cas échéant par la barre anti-encastrement, sur chacune des équerres sont repartis à proportions quasiment égales à droite et à gauche du plan de l'équerre défini par la partie principale de l'équerre.

Encore un autre avantage des dispositions de l'invention est qu'une même paire d'équerres peut servir à monter des traverses de différentes dimensions et des barres anti-encastrement de différentes dimensions.

## Revendications

1. Agencement de traverse pour l'accouplement d'une remorque à un véhicule tracteur, la traverse (1) étant montée sur le châssis du véhicule par l'intermédiaire de deux équerres identiques (2) servant en même temps au montage d'une barre anti-encastrement (3) transversale sur le châssis du véhicule, chacune des deux équerres (2) étant un élément monolithique obtenu par découpe dans une tôle et présentant une partie principale plane (21) comportant une zone de fixation (22) de l'équerre (2) sur le châssis du véhicule et une zone (23) de fixation de la traverse (1) sur l'équerre (2),
**caractérisé en ce que** cette seconde zone (23) comporte deux ailes (24, 25) pour la fixation de la traverse (1) et de la barre anti-encastrement (3) sur l'équerre (2), les ailes (24, 25) étant espacées l'une de l'autre et s'étendant transversalement par rapport à la partie principale, les deux ailes (24, 25) de chacune des équerres (2) étant pliées dans des sens opposés.

2. Agencement selon la revendication 1, **caractérisé en ce que** la traverse (1) et la barre anti-encastrement (3) sont fixées sur les équerres (2) à l'aide de boulons (4).

3. Agencement selon la revendication 1 ou 2, **caractérisé en ce que** les équerres (2) sont adaptées pour être fixées sur le châssis du véhicule à l'aide de boulons (4).

4. Agencement selon l'une quelconque des revendications 1 à 3, **caractérisé en ce que** la traverse (1) et la barre anti-encastrement (3) présentent chacune un profil en U dont la base (11, 31) comporte une zone (14, 34) de fixation d'un crochet d'attelage (5) et dont les deux branches (12, 13, 32, 33) sont adaptées pour la fixation respectivement de la traverse (1) et de la barre anti-encastrement (3) sur les équerres (2).

5. Agencement selon la revendication 4, **caractérisé en ce que** la largeur de la base (11) de la traverse (1) et la largeur de la base (31) de la barre anti-encastrement (3) sont déterminées de façon que la traverse (1) puisse être montée directement sur les équerres (2) et que la barre anti-encastrement (3) puisse au moins partiellement coiffer la traverse (1) de façon à être montée sur les équerres (2) à travers les branches (12, 13) de la traverse (1).

6. Agencement selon l'une quelconque des revendications 1 à 5, **caractérisé en ce que** la barre anti-encastrement (3) présente une longueur supérieure à la longueur de la traverse (1).

7. Agencement selon l'une quelconque des revendications 1 à 5, **caractérisé en ce que** la traverse (1) et la barre anti-encastrement (3) présentent la même longueur.

8. Equerre pour le montage d'une traverse (1) sur le châssis d'un véhicule par l'intermédiaire de deux équerres identiques (2) servant en même temps au montage d'une barre anti-encastrement (3) transversale sur le châssis du véhicule, chacune des deux équerres (2) étant un élément monolithique obtenu par découpe dans une tôle et présentant une partie principale plane (21) comportant une zone de fixation (22) de l'équerre (2) sur le châssis du véhicule et une zone (23) de fixation de la traverse (1) sur l'équerre (2),
**caractérisée en ce que** cette seconde zone (23) comporte deux ailes (24, 25) pour la fixation de la traverse et de la barre anti-encastrement sur l'équerre, les ailes étant espacées l'une de l'autre et s'étendant transversalement par rapport à la partie principale (21) pour la fixation de la traverse (1) et de la barre anti-encastrement (3), les deux ailes (24, 25) étant pliées dans des sens opposés.

## Patentansprüche

1. Querträgeranordnung für das Koppeln eines Anhängers an eine Zugmaschine, wobei der Querträger (1) auf dem Fahrgestell des Fahrzeugs mit Hilfe von zwei identischen Winkeln (2) montiert ist, die gleichzeitig für die Montage eines transversalen Unterfahrschutzes (3) auf dem Fahrgestell des Fahrzeugs dienen, wobei jeder der zwei Winkel (2) ein monolithisches Element ist, das durch Schneiden aus einem Blech hergestellt ist und einen ebenen Hauptteil (21) aufweist, der eine Befestigungszone (22) des Winkels (2) auf dem Fahrgestell des Fahrzeugs und eine Befestigungszone (23) des Querträgers (1) auf dem Winkel (2) aufweist,
**dadurch gekennzeichnet, dass** diese zweite Zone (23) zwei Flügel (24, 25) für die Befestigung des Querträgers (1) und des Unterfahrschutzes (3) auf dem Winkel (2) aufweist, wobei die Flügel (24, 25) voneinander beabstandet sind und sich im Verhältnis zum Hauptteil quer erstrecken, wobei die zwei Flügel (24, 25) jedes Winkels (2) in entgegengesetzte Richtungen gebogen sind.

2. Anordnung nach Anspruch 1, **dadurch gekennzeichnet, dass** der Querträger (1) und der Unterfahrschutz (3) auf den Winkeln (2) mit Hilfe von Bolzen (4) befestigt sind.

3. Anordnung nach Anspruch 1 oder 2, **dadurch gekennzeichnet, dass** die Winkel (2) ausgebildet sind, um auf dem Fahrgestell des Fahrzeugs mit Hilfe von Bolzen (4) befestigt zu sein.

4. Anordnung nach einem der Ansprüche 1 bis 3, **dadurch gekennzeichnet, dass** der Querträger (1) und der Unterfahrschutz (3) jeweils ein U-Profil aufweisen, dessen Basis (11, 31) eine Befestigungszone (14, 34) eines Kopplungshakens (5) aufweist und dessen zwei Schenkel (12, 13, 32, 33) für die Befestigung jeweils des Querträgers (1) und des Unterfahrschutzes (3) auf den Winkeln (2) ausgebildet sind.

5. Anordnung nach Anspruch 4, **dadurch gekennzeichnet, dass** die Breite der Basis (11) des Querträgers (1) und die Breite der Basis (31) des Unterfahrschutzes (3) derart bestimmt sind, dass der Querträger (1) direkt auf den Winkeln (2) montierbar ist und dass der Unterfahrschutz (3) den Querträger (1) mindestens teilweise bedecken kann, um auf den Winkeln (2) anhand der Schenkel (12, 13) des Querträgers (1) montiert zu sein.

6. Anordnung nach einem der Ansprüche 1 bis 5, **dadurch gekennzeichnet, dass** der Unterfahrschutz (3) eine größere Länge aufweist als die Länge des Querträgers (1).

7. Anordnung nach einem der Ansprüche 1 bis 5, **dadurch gekennzeichnet, dass** der Querträger (1) und der Unterfahrschutz (3) dieselbe Länge aufweisen.

8. Winkel für die Montage eines Querträgers (1) auf dem Fahrgestell eines Fahrzeugs mit Hilfe von zwei identischen Winkeln (2), die gleichzeitig für die Montage eines transversalen Unterfahrschutzes (3) auf dem Fahrgestell des Fahrzeugs dienen, wobei jeder der zwei Winkel (2) ein monolithisches Element ist, das durch Schneiden aus einem Blech hergestellt ist und einen ebenen Hauptteil (21) aufweist, der eine Befestigungszone (22) des Winkels (2) auf dem Fahrgestell des Fahrzeugs und eine Befestigungszone (23) des Querträgers (1) auf dem Winkel (2) aufweist,
**dadurch gekennzeichnet, dass** diese zweite Zone (23) zwei Flügel (24, 25) für die Befestigung des Querträgers (1) und des Unterfahrschutzes (3) auf dem Winkel aufweist, wobei die Flügel voneinander beabstandet sind und sich für die Befestigung des Querträgers (1) und des Unterfahrschutzes (3) im Verhältnis zum Hauptteil (21) quer erstrecken, wobei die zwei Flügel (24, 25) in entgegengesetzte Richtungen gebogen sind.

## Claims

1. A cross-piece arrangement for coupling a trailer to a towing vehicle, the cross-piece (1) being mounted on the chassis of the vehicle by means of two identical brackets (2) serving at the same time for assembling a transverse underride guard bar (3) on the chassis of the vehicle, each of the two brackets (2) being a monolithic element obtained by cutting in a metal sheet and having a planar main part (21) comprising a fastening zone (22) for fastening the bracket (2) on the chassis of the vehicle and a zone (23) for fastening the cross-piece (1) on the bracket (2),
**characterized in that** that second zone (23) comprises two wings (24, 25) for fastening the cross-piece (1) and the underride guard bar (3) on the bracket (2), the wings (24, 25) being spaced apart from each other and extending transversely relative to the main part, the two wings (24, 25) of each of the brackets (2) being bent in opposite directions.

2. The arrangement according to claim 1, **characterized in that** the cross-piece (1) and the underride guard bar (3) are fastened on the brackets (2) using bolts (4).

3. The arrangement according to claim 1 or 2, **characterized in that** the brackets (2) are suitable for being fastened on the chassis of the vehicle using bolts (4).

4. The arrangement according to any one of claims 1 to 3, **characterized in that** the cross-piece (1) and the underride guard bar (3) each have a U-shaped profile whereof the base (11, 31) comprises a zone (14, 34) for fastening a hitching hook (5) and the two branches (12, 13, 32, 33) of which are suitable for respectively fastening the cross-piece (1) and the underride guard bar (3) on the brackets (2).

5. The arrangement according to claim 4, **characterized in that** the width of the base (11) of the cross-piece (1) and the width of the base (31) of the underride guard bar (3) are determined such that the cross-piece (1) can be mounted directly on the brackets (2) and the underride guard bar (3) can at least partially cap the cross-piece (1) so as to be mounted on the brackets (2) through the branches (12, 13) of the cross-piece (1).

6. The arrangement according to any one of claims 1 to 5, **characterized in that** the underride guard bar (3) has a length greater than the length of the cross-piece (1).

7. The arrangement according to any one of claims 1 to 5, **characterized in that** the cross-piece (1) and the underride guard bar (3) have the same length.

8. A bracket for mounting a cross-piece (1) on the chassis of a vehicle by means of two identical brackets (2) serving at the same time for mounting of a transverse underride guard bar (3) on the chassis of the vehicle, each of the two brackets (2) being a monolithic element obtained by cutting from a metal sheet and having a planar main part (21) comprising a fastening zone (22) for fastening the bracket (2) on the chassis of the vehicle and a zone (23) for fastening the cross-piece (1) on the bracket (2),
**characterized in that** that second zone (23) comprises two wings (24, 25) for fastening the cross-piece and the underride guard bar on the bracket, the wings being spaced apart from each other and extending transversely relative to the main part (21) for fastening of the cross-piece (1) and the underride guard bar (3), the two wings (24, 25) being bent in opposite directions.
